# EUROPEAN PATENT APPLICATION

(11) **EP 4 009 222 A1**
(43) Date of publication of application: **08.06.2022**
(21) Application number: 21168297.6
(22) Date of filing: 14.04.2021
(51) Int. Cl.: G06F 40/30, G06K 9/62, G06N 3/04, G06N 3/08, G06F 40/268

(54) **METHOD FOR AUTOMATIC PROCESSING OF NATURAL LANGUAGE BY MEANS OF ARTIFICIAL INTELLIGENCE**

(30) Priority: 04.12.2020 IT 202000029894
(71) Applicant: Airesearch S.r.l., 00133 Roma RM (IT)
(72) Inventor: Ferrari, Giordano, Roma RM (IT); Grella, Matteo, Torino TO (IT)
(74) Representative: Perani & Partners S.p.A.

(57) **Abstract**

Methods for automatic processing of natural language text (1) are described. The verbal entities (4) of the text (1) are encoded into a sequence of original vectors (Eᵢ) by means of embedding. The original vectors (Eᵢ) are assumed to be the first-level base nodes (H¹ᵢ=Eᵢ) for a graph neural network (2). For higher levels (t>1), the vectors of each node (H^{t}ᵢ) are computed from vectors (H^{t-1}ᵢ₋₁, H^{t-1}ᵢ, H^{t-1}ᵢ₊₁), of the next lower level (t-1), having indices (i-1, i, i+1) equal to or adjacent to the index (i) of the vector to be computed (H^{t}ᵢ). In an interconnection level, preferably the last one (tmax), in addition to these vectors (H^{t-1}ᵢ₋₁, H^{t-1}ᵢ, H^{t-1}ᵢ₊₁), the computation also involves a synthesis vector (G^{t-1}) representing a synthesis of the whole text (1) and a spaced vector (H^{t-1}ᵢ₊ₖ) with a spaced index (i+k) for a jump distance (k), chosen by machine learning mechanisms. This allows messages to pass between non-adjacent language units (4), thereby facilitating the classification of long-range links between words. The vectors resulting from this transformation process are interpreted by a neural classifier, which assigns various linguistic annotations (5) to the language units (4) and to links between them.

## Description

### Technical field

The present invention is developed in the field of automatic processing of natural language text by means of artificial intelligence.

### Prior art

Automatic processing of natural language is an area that is finding increasing development and applications thanks to new computer technologies. Examples of its use are in machine translation, auto-correction, creating typing suggestions, or extrapolating elaborated concepts from a text for any other reason.

One of the purposes of natural language processing is to assign, to each language unit, one or more annotations, or labels, defining the role of the language unit in the text. The language unit being processed can be, for example, a word, but also a punctuation mark.

The annotations in turn are divided into higher or lower classes. For example, one class may be represented by grammar analysis annotations. Thus, one of the labels assigned to each word will determine, for example, whether it is a noun, an article, a verb, or similar. A higher class might be logical analysis annotations, whereby a word is given the label of subject, predicate, object, complement, or the like.

Some of the annotations are associated with a single language unit. Others are associated with links between different language units, or with groups of language units. For example, the case may arise of a lexical group consisting of several language units such as the sequence of a preposition, an adjective, and a noun. In such a case, proper processing will establish links between these units, and assign labels to the links to indicate, for example, that the preposition supports the noun and the adjective refers to the noun.

The assignment of a category may involve a particularly long context. For example, a subject performing an action and its action verb may be separated by many words, in the presence of subordinate propositions that in turn specify other subjects. Usually, the text undergoes initial processing by word embedding algorithms, which individually translate each individual word into a vector. First information of grammatical analysis can already be derived from this step, for example in recognizing that "the" is an article.

However, it should be noted that many words written in the same way can have different grammatical roles depending on the context, such as the case of the word "pesca" in Italian, which can indicate the peach fruit or the activity of fishing, or the word "play" in English, which can be a verb or a noun. Such ambiguities cannot be resolved at the word embedding level.

Various types of artificial intelligence models are therefore employed to process the vectors rendered by word embedding. The most common recurrent models (particularly LSTM models) perform directional processing, meaning that each word is processed while also taking into account all the words that precede it. For example, the first word is processed alone. In contrast, the second word is processed taking into account both the first and second words. So, for the word of index i, the processing takes into account all words with indices from 1 to i.

This type of model has the advantage that it follows the natural human reading sense, from left to right (or in different ways depending on the languages considered), always taking into account what the algorithm has already "read". Written and spoken language is built to be understood in this direction.

However, the actual reading patterns of a human being do not just follow the sequence of words in the sentence. Indeed, some studies have shown that during reading the eyes periodically "jump" forward a few pieces of the sentence, to return immediately to the reading point just left. It is assumed that this is done, even only at an unconscious level, to obtain simplified information useful to better interpret the part of the sentence already read or being read.

For example, these forward "peeks" allow one to recognize the expected length of the sentence, the presence of incidental propositions, the fact that the sentence is interrogative. Other information that is pre-acquired with forward glances can be the position of an expected part of speech, such as a verb that is very distant from the subject.

The known directional algorithms that have been introduced perform more effectively in classifying single words with low-level annotations, or connections between nearby words. On the contrary, more difficulty is encountered in recognizing long-range links. Long-range links are clearly not recognizable by directional processing until the last word of the link is reached. At that time, however, the processing is based on a very large number of preceding words, and there is therefore a greater risk of errors.

To overcome this drawback, bidirectional algorithms have been developed, for example as developed by Schuster and Paliwal (1997). These perform two directional processing simultaneously, one from left to right, and the other from right to left. Thus, in a sentence of n language units, for the i index word there is one processing involving words 1 through i, and another independent processing involving words i through n.

It was noted that this can significantly increase the model's performance, while still suffering from some limitations including inefficient long-distance information transfer. The applicant in particular attributes these limitations to the fact that, in order to obtain a bidirectional analysis, a reverse directional analysis is used, i.e. the "right-to-left" one, which is a method reasonably contrary to the normal operating logic of human language that instead presumably acts by progressively enriching "local" contexts.

Other "Attention Is All You Need" models (Vaswani et al., 2017) completely abandon the sequential nature of language by combining all words together. While enjoying remarkable performance in terms of accuracy, these models have limitations in their general use as combining all words makes computation burdensome. The applicant in particular attributes these limitations to the fact that no consideration is given to the sequential nature of the language which helps to explicitly reduce the number of computations required.

The average error rate that has been observed in these types of algorithms is 6% of the classified units, meaning the accuracy is 94%.

Another type of known model employs an encoding model using a graph neural network. Examples of this model are described in "Star Transformer" (Guo et al., 2019). This neural network includes nodes that are organized into levels.

The vectors obtained by word embedding are associated to the nodes of the first level. Each node of the second level combines in a particular manner, which is decided and progressively refined by learning mechanisms of the neural network, three vectors of the first level nodes. In particular, the second level node of index i combines the vectors of first level nodes with indices i-1, i and i+1.

In this way, the second level vectors begin to be representative not only of the word they are centered on, but also of part of its context.

In turn, the third level combines three second-level vectors with the same logic with which the second level combines the first level. For the third-level vector of index i, the three combined second-level vectors have indices i-1, i, and i+1, and each is a combination of first-level vectors overall ranging from i-2 to i+2.

Thus, each vector of the third level can observe a context of five words. Increasing the number of levels by analogy, at the fourth level we see contexts of seven words, at the fifth level of nine words, and so on.

After processing by the encoding model, a neural classifier recombines some particular nodes of the neural network of the encoding model, which can be for example of the last level, to extrapolate the desired linguistic annotations. Indeed, this makes the encoding model's processing outcome comprehensible to humans again, whereas the vectors contained in the neural network are generally not comprehensible to humans.

With the described graph structure, in a sentence of n words, the first level in which at least one node (the central node) observes an overall context ranging from the first to the last word is level (n/2)+1, where n/2 is rounded up. In order for then each word to be contextualized taking into account all the others, n levels are required, i.e. n-1 recombination steps of an entire level starting from the first one.

However, it is not practical for the number of levels in the graph to grow proportionally to the number of words in the text, so a maximum number of levels is set, which in principle limits the maximum context size given to each word.

Therefore, in order to remove this limit on the maximum context size, the article "Star Transformer" proposes to add a synthesis node to each level. A vector is computed for the synthesis node as a particular combination that takes into account all other vectors in the level, as well as particular combinations of groups of consecutive vectors, again from the same level. This then creates at each level a particular form of the global context.

At the upper level, each vector is computed by combining not only the three vectors already described from the previous level, but also the vector of the synthesis node. Thus, there is already at least a small amount of overall context processing at each level, and as the levels increase this is progressively reshuffled and refined, so that after a number of levels the overall context processing is quite robust for each word.

### Summary of Invention

The purpose of this invention is to provide an automatic processing model of natural language that is more advanced than those described with reference to the prior art. In particular, the purpose of this invention is to increase processing accuracy, especially with regard to classification in the case of contexts with long-range connections between distant language units.

These and other purposes are achieved by a method for automatically processing a text or portion of text in natural language, or by a data carrier that contains instructions for carrying out the method using a processor, according to any one of the following claims.

The claimed invention provides that a graph neural network encoding model is used, with nodes distributed on various levels. As described for the prior art, vectors obtained directly from text embedding are used for the nodes in the first level of the neural network, and they are gradually combined to obtain the vectors of the higher level nodes.

One of the levels is chosen as the interconnection level, preferably the last level. For the calculation of the vectors of this level, not only the basic input data provided in the other levels are used, i.e. those vectors which are in the previous level and have the same index, or indices immediately adjacent to the vector to be calculated. In addition to these, in fact, a vector is also considered, always from the level immediately below, which has an index spaced by a certain jump distance, with respect to the index of the vector to be calculated.

Adding this spaced vector significantly increases the context that the level of interconnection is able to recognize, resulting in improved performance in recognizing contexts with long-range connections between words. The optimal jump distance by which the spaced vector is chosen is computed by a separate artificial intelligence mechanism.

Experimentally, the model of the invention has been found to have good accuracy.

Further features and advantages of the invention will be recognizable to a person skilled in the art from the following detailed description of exemplary embodiments of the invention.

### Brief description of figures

For better understanding of the following detailed description, some embodiments of the invention are illustrated in the accompanying drawings, where:

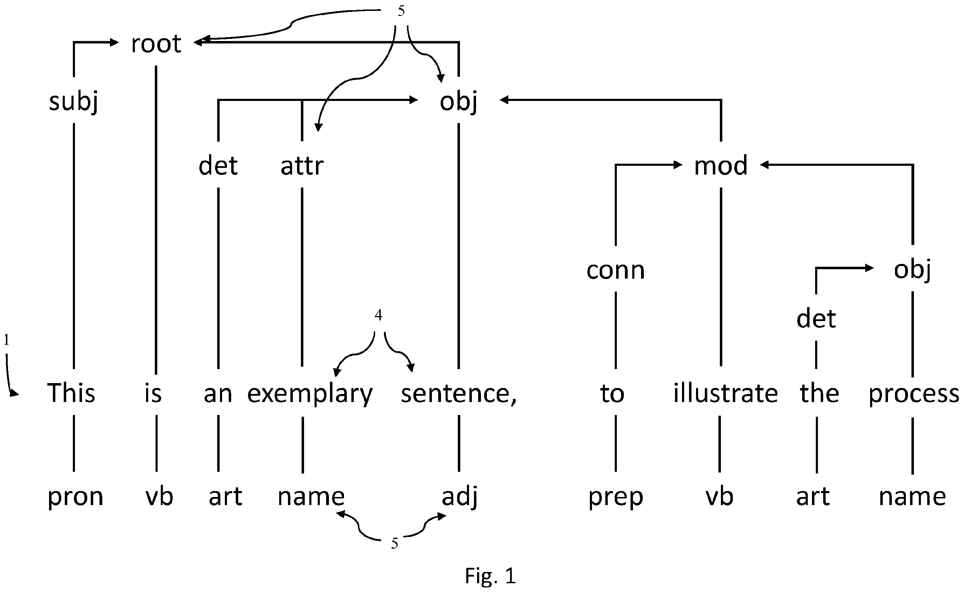

- figure 1 schematically shows an example of a sentence to which linguistic annotations are attributed,

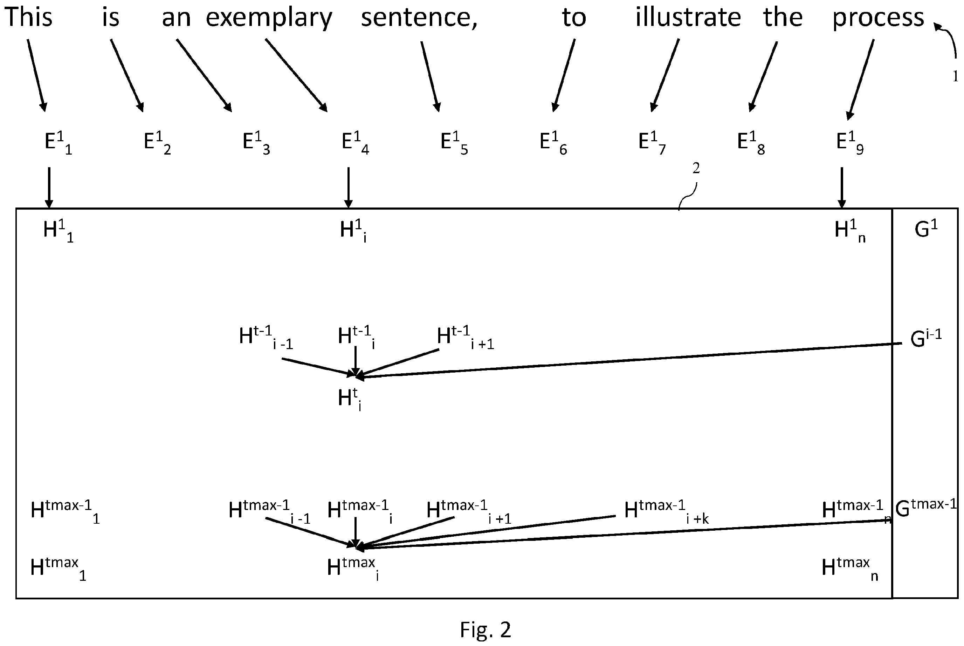

- figure 2 schematically shows the embedding phase of the sentence of figure 1, and its subsequent processing with a graph neural network encoding model according to an embodiment of the invention,

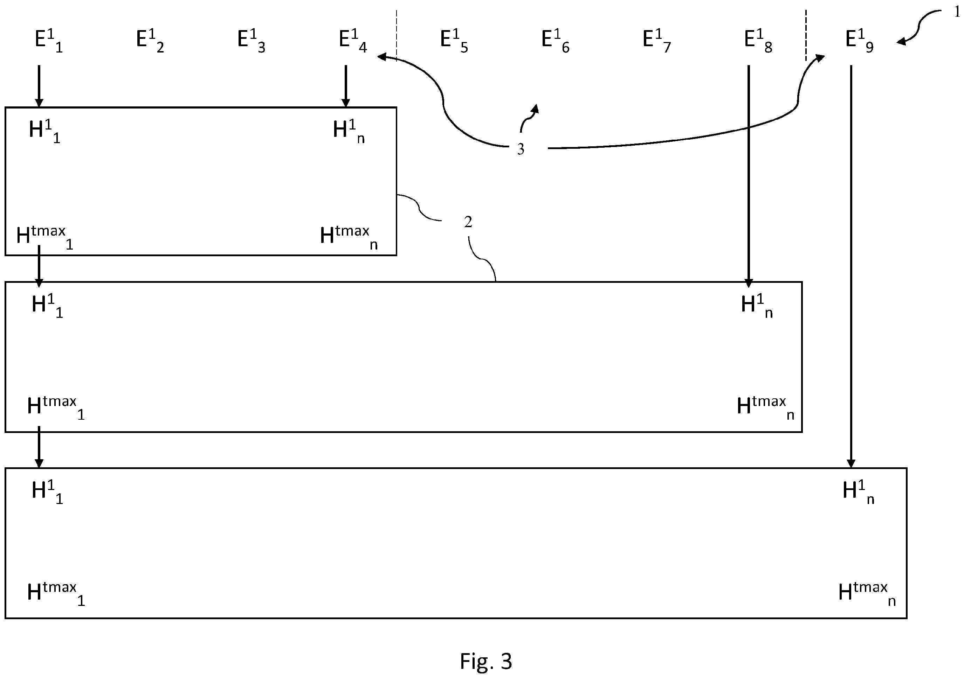

- figure 3 schematically shows an encoding model according to a sequential embodiment of the invention.

### DETAILED DESCRIPTION

This detailed description discloses methods for automatically processing of a text 1 in natural language, or at least of a portion 3 of text 1. All methods described use as a basis an encoding model of the type with a graph neural network 2.

The applicant has considered a number of possible advantageous modifications of prior graph neural network encoding models. The preferred embodiment of the invention simultaneously encompasses all such advantageous modifications. However, a person skilled in the art will readily understand that smaller advantages can still be obtained by applying a smaller set of these modifications, e.g., only one of them.

The claimed invention focuses primarily on one such modification of basic graph neural network processing. However, embodiments that disregard the particular claimed modification, but implement different modifications, should also be considered as disclosed by this description, as will follow. All such embodiments may then be the subject of other independent claims.

In view of this, essential features of a central method of automatically processing at least a portion 3 of a text 1 in natural language by means of artificial intelligence software are first described, to which variants of the central method that can be used individually or in combination with each other will then be added.

Software that contains instructions for carrying out the various variants of the method, particularly software of the context encoder type, as well as computer-readable data carriers that contain the software in their memory, are also to be understood as disclosed in this description, and possible object of independent protection.

The central method may be applied to the entire text 1 or, in some variants, to a restricted portion 3 of the text 1.

Each text 1 or portion 3 of text 1 comprises a sequence of language units 4, which may be, for example, words. Other language units 4 that may be considered are spacing and/or punctuation marks. In some variations, instead, the language units 4 that are considered are individual characters, such as individual letters, instead of entire words.

All variants of the method result in linguistic annotations 5 being assigned to each language unit 4, which account for the language unit 4 itself, but also for contextual information such as links between different language units 4, or groups of consecutive language units 4.

Annotations 5 are grouped into annotation 5 classes. An example of an annotation 5 class is a grammar class, to which belong annotations 5 given essentially by parts of speech, such as noun, pronoun, adjective, verb, adverb, article, preposition, conjunction, and interjection.

This class generally includes annotations 5 attributable to single words. Recall, however, that the word in different embodiments may be considered a single minimum language unit 4 or a language unit 4 consisting of a group of minimum language units 4 represented by letters.

Another class, higher than the grammatical class, is the logical or syntactic class, to which belong such annotations 5 as subject/object, predicate (or verb), and complement. These classes can refer to individual words or words considered in their context.

The highest class among those illustrated is then the semantic class. It includes annotations 5 that are attributed to logical/syntactic entities such as complements or propositions, specifying what the nature of that entity is. Examples of semantic annotations 5 are place, time, means, manner, end, matter, agent, patient, and the like.

All the examples given so far, for the other annotations 5 as well, but particularly for the semantic class, are not meant to be limiting and are in any case known to persons skilled in the art, who can easily consider other equivalent examples of classes and annotations 5. In some embodiments, the classification may be limited to only some of the classes described, while higher or lower classes are delegated to other models that cooperate with the one described.

Still another class is given by the morphological class. This class is lower than the grammatical class, and intervenes only in some of the described variants, preferably if the minimum language units 4 considered are smaller than words, e.g. letters or syllables. Some morphological annotations 5 may indicate whether a certain group of letters is the root of a word, or a desinence, prefix, or suffix, or whether a word is compound or derived. This processing facilitates higher class processing, allowing us to identify, for example, features common to verb tenses, or the gender of a noun.

Starting with letters generally requires more time-consuming processing to attribute the higher class annotations 5 to language units 4. There are, however, significant advantages, such as the fact that the method can also categorize words that are not included in a vocabulary, but whose meaning a human being would recognize, for example because of common roots.

Having chosen the language units 4 and the classes to be assigned to them, the central method involves encoding the sequence of language units 4 into a respective sequence of vectors Ei, which will be called original vectors. The encoding is done by an algorithm of word embedding, if the original language units 4 are words, or of character embedding, in the event of letters. Such algorithms are known to persons skilled in the art and will not be discussed here.

The central method then continues by processing the sequence of original vectors Ei using an encoding model of the graph neural network 2 type. The preferred graph neural network 2 is trained end-to-end with algorithms that optimize gradient descent (such as Adam or RAdam). These details are known to persons skilled in the art, but will nevertheless be described herein in their relevant parts to better understand the invention.

The graph neural network 2 includes a plurality of nodes, organized in a plurality of levels t. We thus distinguish a first level t=1, a last level t=tₘₐₓ, and in case there are at least three levels, also one or more intermediate levels between the first level and the last level. Experimentally, good results have been obtained with a number of levels tₘₐₓ between seven and eleven.

As it will be clear from the following, some nodes may have an operation similar to each other, and different from the operation of other nodes. One type of nodes that will be commented upon is given by a plurality of nodes that are herein called base nodes. In some embodiments, the graph neural network comprises exclusively base nodes. In preferred embodiments, additional nodes that will be specified are provided along with the base nodes.

Each level comprises a sequence of base nodes, and each base node is identified in the sequence of its level by a respective index i. In some embodiments, each level comprises a number n of base nodes equal to the number n of language units of at least one portion of the text to be analyzed.

A respective vector is assigned to each node. In particular, the vectors assigned to the base nodes will be denoted as H^{t}ᵢ. The superscript t indicates the number of the generic level of the node to which the vector is assigned, and may be numbered from 1 to tₘₐₓ, i.e., the number of the highest level in the network. Instead, the subscript i indicates the generic sequence index that identifies the node within the level, and can be numbered from 1 to n, that is the number of base nodes H^{t}ᵢ present in each level.

The original vectors Ei are assigned to respective base nodes of the first level of the graph neural network 2, becoming the vectors H¹ᵢ=Eᵢ. Instead, the vectors of the base nodes H^{t}ᵢ of the levels above the first t>1 are each computed according to a respective trainable function, which will be referred to here as the aggregation function.

Each aggregation function is configured to combine certain vectors as input data, which will be called aggregation input data.

Depending on the mathematical nature of the aggregation function and how it is trained, nonlinear affine transformations are preferred, such as gate-type mechanisms, residual connections, layer normalization, and soft self-attention. These techniques are familiar to persons skilled in the art, who will be able to easily implement them, or replace them with other equivalent functions.

The aggregation input data include at least one set of input data referred to as the basic input data. In some embodiments, the basic input data are the only aggregation input data. In other embodiments, the aggregation input data includes additional input data as compared to the basic input data.

The basic input data are vectors associated with base nodes of the next lower level t-1 with respect to the level t of the base node for which the vector H^{t}ᵢ is being computed using the aggregation function. In particular, the indices of the vectors that constitute the basic input data are i-1, i and i+1, i.e., the index of the vector to be computed and other indices obtained by increasing and decreasing it by one, respectively. Therefore, the basic input data for the vector H^{t}ᵢ are H^{t-1}ᵢ₋₁, H^{t-1}ᵢ, H^{t-1}ᵢ₊₁.

Note that this is only possible if there are base nodes in level t-1 that have indices i-1 and i+1. For example, the vector H^{t-1}ᵢ₋₁ will be excluded from the combination if i-1=0, i.e. i=1. Instead, H^{t-1}ᵢ₊₁ will be excluded from the combination if i+1>n, i.e. if i=n.

In the preferred embodiment, in the event of exclusion of one of the basic input data, i.e., when i=1 or i=n, a trainable artificial vector is used as replacement aggregation input data.

Those described so far are the common features of the central processing method with encoding by graph neural network 2, on which one or more advantageous variants including the claimed one can be applied.

After processing by the encoding model has been completed (once or several times, depending on the choice of the central method or certain variants, as will be described below), the linguistic annotations 5 are determined and assigned to the various language units 4, and related links or groups, by a neural classifier.

The neural classifier is configured to compute each linguistic annotation 4 by a respective function, which will be referred to as a classification function. Different classification functions can be used, for example, for different classes of annotations.

Each classification function is configured to combine input data that will be referred to as classification input data. They are represented by a plurality of vectors assigned to a plurality of nodes of the graph neural network 2 that was obtained with the encoding model (or of one of the networks, if the processing of the encoding model is repeated multiple times).

Preferably, among the classification input data there is at least one vector assigned to one of the base nodes H^{t}ᵢ, and more preferably, at least one vector assigned to a base node of the last level H^{tmax}ᵢ.

In an advantageous embodiment, the neural classifier uses input data of different levels based on the class to which the annotation 5 it needs to compute belongs. In fact, higher level nodes are more representative of annotations 5 related to a broad context and the links between language units 4, while lower level nodes are more representative of annotations 5 related to a single language unit 4.

Note in particular that although higher level nodes have more elaborate vectors, they have the same mathematical dimensions and cannot have more information content than the vectors of lower level nodes. Therefore, with the acquisition of more context information in the higher levels, there is also a loss of information about the individual language unit 4.

Therefore, a classification function related to an annotation 5 of a relatively low class, such as may be a morphological, or grammatical class, will have, as classification input data, vectors that are associated with nodes (e.g. base nodes) of relatively low levels.

Conversely, a classification function related to a different annotation 5 of a relatively high class, such as may be a logical (i.e., syntactic) or semantic class, will have vectors that are associated with nodes of higher levels as classification input data.

The examples given above of higher or lower classes are illustrative only. The logical class has been introduced both in the lower levels, because it is relatively low compared to e.g. the syntactic and semantic classes, and in the higher levels, because it is relatively high compared to the morphological and grammatical classes, provided that clearly at least the two highest and lowest classes for which the levels are to be compared must remain different from each other. In the preferred embodiments all the above classes are used, possibly with the exception of the morphological class if we start from words and not characters. It is therefore evident that each class can draw from gradually increasing levels with respect to the previous class, according to the hierarchy of classes illustrated above, without limitation to the comparison of only two different classes.

According to an example, grammatical annotations 5 can be based on classification input data of levels between 1 and 5, logical-syntactic annotations on levels 6 to 9, and semantic annotations on levels 10 and 11 (i.e., tmax).

In an advantageous embodiment, some intermediate representation nodes with associated vectors Y are provided to facilitate the final classification of the neural classifier. These nodes are described here as part of the neural classifier, but they can also be considered as part of the neural network of the encoding model. If they are considered part of the encoding model, these are an example of additional nodes to the base nodes, and are not necessarily attributable to a specific level.

A preferred example of intermediate representation vectors Y is a sequence of intermediate representation vectors Yi, with index i and length equal to the number of language units to be processed n, i.e., equal to the number of base nodes H^{t}ᵢ of each level t. Each vector Yi in this sequence is computed by an intermediate representation function using input data, called intermediate representation input data. The intermediate representation input data includes the base nodes H^{t}ᵢ having the same index as the intermediate representation vector Yi, for all levels t of the neural network, from the first level 1 to the last level tₘₐₓ. The preferred intermediate representation function, understandable to persons skilled in the art, is Yi = linear(concat(H⁰ᵢ, H¹ᵢ, ..., H^{tmax}ᵢ)).

These intermediate representation vectors Yi advantageously collect in themselves information of all levels related to the same language unit 4, and thus are suitable to be used for further processing in order to attribute higher or lower class annotations 5.

Following the attribution of annotations 5 by the classification algorithm, the method obtained the final result. For the purposes of automatic learning of the artificial intelligence involved, and particularly of the encoding model, as anticipated a gradient descent method is used, some of the details of which are reported herein to better illustrate some aspects of the preferred embodiments of the invention.

In particular, for learning purposes it is possible to compare linguistic annotations 5, computed by the classifier, with corresponding verified reference annotations. For example, the reference annotations may be the annotations that a human user attributes to the language units 4 of the same processed text 1, and which are therefore assumed to be correct. In preferred embodiments, the reference annotations are provided by means of a dataset containing several texts and all correct annotations attributable to each text. The neural network 2 will thus have several texts to train with to provide better results.

In case there are differences between the reference annotations and the annotations 5 computed by the classifier, a plurality of correction gradients is intended to be generated. Each correction gradient is used to modify one of the functions that were used to compute a vector of a node of the neural network 2.

Gradients descend in the sense that they propagate from a node that gave a different result than the desired one, to a lower level node that was used to compute the vector of the previous node. From the latter, it propagates further to nodes of even lower levels.

In more detail, primary correction gradients are generated for first nodes, given by nodes corresponding to classification input data. In other words, since at least one of the classification functions gave an incorrect result, primary gradients are directed to those nodes where the inputs of that classification function had been generated. Among the first nodes there may be, for example, base nodes H^{t}ᵢ.

Then, secondary correction gradients are generated in cascade for second nodes. Each secondary gradient starts from a source node and arrives at a destination node, i.e., a second node. The source nodes first include all first nodes that received primary gradients. Destination nodes, i.e., second nodes, are given by nodes corresponding to the input data used to compute the vector of the respective source node. Each second node in turn becomes a source node until the first layer of the neural network is reached.

Within neural network 2, the functions that are modified by the gradients include at least the aggregation functions, i.e., those related to the base nodes. However, in the presence of additional nodes described below, their functions can also be modified by gradients.

This learning mechanism leads all the internal functions of the neural network 2 to converge so as to progressively increase the reliability of the computed annotations 5.

Instead, note that preferably no correction gradients are generated that are suitable to modify the classification functions themselves, and preferably at least the intermediate classification functions. Thus, the entirety of any error is attributed to the encoding model alone, and not to the classifier. Thus, the encoding model makes a greater training effort and adapts more quickly to provide correct classification inputs to the classifier, regardless of the functions the latter uses.

An advantageous sequential variant of the central method will now be described.

In this embodiment, it is preliminarily provided to segment the text 1 to be processed into a sequence of text portions 3. In the following, two consecutive of these text portions 3 will be called first and second text portions, without necessarily meaning that the first text portion is the one that begins the text.

Segmenting means, for example, that you define a limit number of minimum language units 4 such as words or characters. Then, you identify each text portion 3 as a group of consecutive minimum language units 4 in a number equal to the limit number. The last text portion 3 may have fewer minimum units 4 than the limit number, due to the exhaustion of the text.

Clearly, this segmentation will very frequently provide incomplete text portions 3, such as pieces of a word (if one had started with the letters as minimum language units 4) or pieces of a sentence.

Following segmentation, the central method, optionally modified with one or more of the variants that follow, is used several times, sequentially, on the different text portions 3. In other words, it is used as a partial processing method. Each partial processing involves the use of a separate encoding model with the construction of a distinct neural network 2.

For the text portion 3 that begins text 1, the partial processing does not differ significantly from the above. In particular, each base node of the first layer is assigned a vector obtained directly by word embedding or character embedding of the text portion 3, i.e., one of the original vectors.

On the other hand, for each subsequent text portion 3, some of the base nodes of the first level receive vectors that derive from the previous partial processing already performed for the previous text portions 3.

More specifically, following the partial processing of the first text portion, one or more memory nodes are selected from the nodes of the neural network 2 used for the partial processing of the first text portion. At least one of the memory nodes belongs to a higher level than the first one, i.e., it is not simply a vector obtained directly by word embedding or character embedding. Preferably, nodes of the last level, more precisely all base nodes of the last level, are chosen as memory nodes.

Partial processing of the second text portion then exploits the choice of memory nodes as follows. During partial processing of the second portion of text, the base nodes of the first layer are divided into nodes called retrospection nodes, with relatively lower index, and nodes called continuation nodes, with relatively higher index.

The vectors that were calculated for the selected memory nodes are assigned to the retrospection nodes. In contrast, the original vectors Ei, obtained from encoding the sequence of language units 4 of the second text portion, are normally assigned to the continuation nodes. With the exception of these features, partial processing of the second portion of text continues as the first. Thus, the levels above the first one, in the neural network 2 used for the second partial processing, will have as data in the lower levels both new text portions and already processed information about the previous text portions.

In this variant, since each graph neural network 2 acts both on the previously contextualized vectors and on a new text portion 3 having anyway a limited length, it is possible to reduce the total number of levels tₘₐₓ of each network 2. The optimal number will depend on several factors, including the limit length chosen for each text portion 3.

With this sequential processing, in different variants the classifier might intervene only after the end of the last partial processing, which will be the one that provides the most complete and definitive results, or also at the end of one or more of the previous partial processing. If it intervenes only at the end, the classification input data will be represented only by vectors assigned to nodes of the graph neural network 2 of the encoding model used for the partial processing of the last text portion 3. Note that this last partial processing, thanks to the retrospection nodes, carries in itself the encoding of the whole text 1.

Another variant of the central method will now be described, which promotes contextualization of language units even in the case of long-distance connections. This variant intervenes on the graph neural network 2. Therefore, it can also be combined with the sequential variant, to enhance each of the partial elaborations.

According to this variant, at least one level of the graph neural network 2 is chosen as an interconnection level, preferably only one interconnection level. The interconnection level must be higher than the first level, and in the preferred embodiment is given by the last level tₘₐₓ. The basic nodes of the interconnection level will be referred to as interconnection nodes.

For each interconnection node, the aggregation function that computes the vector H^{t}ᵢ (which in the preferred form is H^{tmax}ᵢ) is modified to use aggregation input data additional to those used for the other levels, and in particular additional to the basic input data H^{t-1}ᵢ₋₁, H^{t-1}ᵢ and H^{t-1}ᵢ₊₁. More specifically, the additional aggregation input data is represented by a spaced vector H^{t-1}ᵢ₊ₖ. The spaced vector H^{t-1}ᵢ₊ₖ is relative to a spaced node, which has a spaced index i+k relative to the index i of the vector to be computed H^{t}ᵢ. The index spacing is equal to a positive or negative jump distance k, which will generally be chosen for each interconnection node. Instead, the level of the spaced vector H^{t-1}ᵢ₊ₖ is the one immediately below the interconnection level.

The jump distance k is computed for each interconnection node by an automatic learning mechanism, precisely a reinforcement learning mechanism. The learning mechanism estimates an optimal jump distance by means of a trainable agent function, preferably of policy gradient type, known to the skilled persons.

The agent function uses input data that will be referred to as agent input data. Among the agent input data for a certain interconnection node, the same basic input data used for that interconnection node H^{t-1}ᵢ₋₁, H^{t-1}ᵢ and H^{t-1}ᵢ₊₁ are considered. In addition to these, another agent input data is the vector H¹ᵢ (which is equal to Ei, except for some cases of the sequential variant), associated with the base node of the first level that has the same index i as the interconnection node considered. Other agent input data, analogous to the aggregation input data, are used only in some variants that will be described below.

Note, however, that the nature of the agent function, which computes an integer given by the optimal jump distance k, is significantly different from the nature of the aggregation function, which computes vectors H^{t}ᵢ, despite part of their input data being overlapping.

Having chosen the jump distance, the spaced vector H^{t-1}ᵢ₊ₖ is essentially used to partially replace one of the basic input data H^{t-1}ᵢ₋₁, H^{t-1}ᵢ and H^{t-1}ᵢ₊₁ of the aggregation function of the interconnection node under consideration.

Precisely, the aggregation function relative to the predetermined interconnection node is configured to compute a first weight λ, and to compute a second weight 1-λ complementary to the first weight λ. The first weight λ is assigned to the spaced vector H^{t-1}ᵢ₊ₖ. The second weight 1-λ is assigned to another vector among the basic input data H^{t-1}ᵢ₋₁, H^{t-1}ᵢ and H^{t-1}ᵢ₊₁. So, such a vector receiving the second weight 1-λ is naturally assigned to a node of a level immediately below the interconnection level t-1, preferably tₘₐₓ-1 (but in any case, for greater generality t-1 will be used in the following). The index of the vector that receives the second weight is chosen according to the fact that the index i+k of the spaced vector H^{t-1}ᵢ₊ₖ precedes or follows the index i of the interconnection node under examination.

In other words, if the spaced index i+k is greater than the index i of the interconnection node, i.e. k>0, an index equal to the index of the interconnection node increased by one i+1 is chosen for the allocation of the second weight 1-λ. Vice versa, if the spaced index i+k is smaller than the index i of the interconnection node, i.e. k<0, an index equal to the index of the interconnection node decreased by one i-1 is chosen for the allocation of the second weight 1-λ.

The spaced vector H^{t-1}ᵢ₊ₖ, which has the first weight λ, and the vector with the second weight 1-λ, i.e., H^{t-1}ᵢ₊ᵢ or H^{t-1}ᵢ₋₁, are summed with their respective weights, and substituted, in the aggregation function of the interconnection node, for only the vector with the second weight. Consequently, named f₁ the aggregation function that would compute the interconnection node vector in the absence of spaced vectors, where H^{t}ᵢ=f₁(H^{t-1}ᵢ₋₁, H^{t-1}ᵢ, H^{t-1}ᵢ₊₁), and instead named f₂ the aggregation function modified according to the spaced vector, we get the following:
if k>0, H^{t}ᵢ=f₂(H^{t-1}ᵢ₋₁, H^{t-1}ᵢ, H^{t-1}ᵢ₊₁, H^{t-1}ᵢ₊ₖ)=f₁(H^{t-1}ᵢ₋₁, H^{t-1}ᵢ, (λH^{t-1}ᵢ₊ₖ+(1-λ)H^{t-1}ᵢ₊₁)), and
if k<0, H^{t}ᵢ=f₂(H^{t-1}ᵢ₋₁, H^{t-1}ᵢ, H^{t-1}_{i+1,} H^{t-1}ᵢ₊ₖ)=f₁((λH^{t-1}ᵢ₊ₖ+(1-λ)H^{t-1}ᵢ₊₁), H^{t-1}ᵢ, H^{t-1}ᵢ₊₁).

Returning to the details of choosing the jump distance k, the agent function first assigns a probability of optimality to several possible jump distances, and then selects as the optimal jump distance k the one with maximum probability.

For the purpose of this calculation, a common maximum distance is set for all interconnection nodes. The learning mechanism then always chooses jump distances k with modules not greater than the maximum distance.

Note that the automatic calculation of the jump distance k can sometimes generate results with a module not greater than one, i.e., k=1 or 0 or -1. In such a case, the spaced vector is already included in the basic input data H^{t-1}ᵢ₋₁, H^{t-1}ᵢ and H^{t-1}ᵢ₊₁, so the aggregation function can be analogous to that of levels different from the interconnection level, i.e. there is no difference between the modified aggregation function f₂ and the unmodified aggregation function f₁. However, it is generally expected that for at least one of the interconnection nodes, the jump distance following the calculation results to have a module greater than one.

Due to the fact that the aggregation function takes into account at least one spaced vector H^{t-1}ᵢ₊ₖ among its aggregation data, the neural network 2 is able to recognize and classify links between even relatively distant language units 4. The artificial intelligence underlying the computation of the optimal jump distance k will then converge to jumps involving particularly significant H^{t-1}ᵢ₊ₖ spaced vectors. This in some ways replicates human reading behavior that brings the eyes forward to quickly grasp useful information and then return to the previous reading point.

In order to reinforce the learning of the agent function, after estimating the optimal jump distance, an exploitation probability and a complementary exploration probability are defined. The jump distance k is not chosen equal to the optimal distance in all cases, but only with the probability given by the exploitation probability. Instead, with the probability given by the exploration probability, the jump distance is chosen different from the optimal distance.

In other words, an unexplored attempt is periodically allowed in the choice of the jump distance in order to verify if it is better or worse than the choice strategy established up to that moment.

The exploratory choice is expected to yield worse results than the established choice most of the time. Therefore, exploration probabilities between 5% and 30%, such as 15%, are generally chosen. Increasing the exploration probability can still have faster learning benefits.

Similarly to the correction gradients introduced about aggregation functions, learning for the agent function is also aided by comparing the linguistic annotations 5 computed by the classifier with the verified reference annotations. If the result of the comparison is positive, the choice made of the jump distance k is rewarded, i.e., it receives a reward that will encourage its entry into the established choice strategy. In case of differences instead the repetition of the choice of the same jump distance k will be deterred for the future, that is, the reward will be negative. In both cases, we obtain a modification of the agent function.

The preferred model for agent function learning is the Reinforce model, which is well known to persons skilled in the art.

In parallel, the generation of correction gradients for aggregation functions also takes place. In particular, one of the interconnection nodes can become a source node for correction gradients if it has received a correction gradient, preferably primary, but potentially also secondary if the interconnection level was not the last level tₘₐₓ.

In such a case, as described above, among the secondary gradients generated from the interconnection node, there are secondary gradients intended for the nodes having assigned the basic input data H^{t-1}ᵢ₋₁, H^{t-1}ᵢ and H^{t-1}ᵢ₊₁ used for the interconnection node. However, it is preferable that no secondary correction gradients are generated from the interconnect node for the spaced node H^{t-1}ᵢ₊ₖ. This prevents the correction gradients from propagating too far, and potentially to wrong jump distances k, from the interconnection node.

The spaced node may still receive secondary correction gradients from other source nodes, for which it is not considered a spaced node, but one of the basic input nodes. For example, indicating i*=i+k, we would have that the spaced vector H^{t-1}ᵢ₊ₖ=H^{t-1}_{i*} is a basic input data for the calculation of the vector H^{t}_{i*} through the relative aggregation function, and therefore the spaced vector can receive from this a secondary correction gradient.

Another variant of the central method is now described, which may be combined with both the sequential variant (by modifying any partial processing) and the variant that facilitates contextualization in the case of long-distance links using the spaced vector. The variant now described also facilitates contextualization in the case of long-distance links, through the use of synthesis nodes and vectors.

According to this variant, at least one level, preferably each level of the graph neural network 2, includes indeed a respective synthesis node to which a synthesis vector G^{t} is assigned. The synthesis node is therefore not counted among the base nodes, but is flanked to them at each level. Eventually, the last level can be excluded because there are no higher levels that would exploit it. Alternatively, even the last level tₘₐₓ may have a synthesis node to be used for other purposes, e.g. as classification input data.

The synthesis vector G^{t} is used by the aggregation functions of the upper level nodes. In other words, for each vector H^{t}ᵢ of a level t, the aggregation function will use as aggregation input data, in addition to the basic input data H^{t-1}ᵢ₋₁, H^{t-1}ᵢ and H^{t-1}ᵢ₊₁, (and in addition to the spaced vector H^{t-1}ᵢ₊ₖ,, if it concerns an interconnection level) also the synthesis vector G^{t-1} assigned to the synthesis node of the immediately lower level t-1.

If then the level t of the vector to be calculated H^{t}ᵢ is an interconnection level, the synthesis vector G^{t-1} of the lower level is not only included among the aggregation input data of the aggregation function, but preferably also among the agent input data of the agent function used to calculate the jump distance k.

The synthesis vector G^{t} of each level is calculated using a trainable synthesis function. The synthesis function combines input data that will be referred to as synthesis input data. Among them, there are at least the vectors H^{t}ᵢ allocated to all base nodes having the same level t of the synthesis node, with indices thus ranging from 1 to n.

In addition to these, other synthesis inputs data are represented by pair vectors and triplet vectors. Each pair vector is given by the sum of a pair of vectors H^{t}ᵢ+H^{t}ᵢ₊₁, assigned to base nodes having a pair of consecutive indices i, i+1, in the same level t of the synthesis node. Instead, each triplet vector is given by the sum of a triplet of vectors H^{t}ᵢ+H^{t}ᵢ₊₁+H^{t}ᵢ₊₂, assigned to base nodes having a triplet of indices between them consecutive i, i+1, i+2, in the same level t of the synthesis node. Preferably, all constructible pair and tern vectors for the level are used.

A person skilled in the art will recognize that in addition to pair and triplet vectors, j-tuple vectors involving the sum of j consecutive vectors of the level, with j also greater than three, can be added.

Still another preferred additional synthesis input data is the average of the same level t vectors of the synthesis node.

Including in the synthesis node vector G^{t} at least all the vectors of level t, and using the synthesis vector G^{t} among the aggregation input data for the base vectors of the next level H^{t+1}ᵢ adds at least some information about the overall context of the text or portion of text being processed at each level. For example, at the second level each vector H²ᵢ no longer sees only a three-word context, but sees at least some details of the entire context.

This expansion of context is strengthened at each successive level t, until we reach the last level tₘₐₓ, where this mechanism is preferably also joined by the mechanism of interconnection with the spaced vector H^{tmax-1}ᵢ₊ₖ, to further strengthen contextualization and recognize long-range connections.

The pair and triplet vectors introduce as an additional advantage the fact that the synthesis operated in the synthesis node is sensitive to the order of the words in the sentence. In fact, exchanging two words in the text, at least some of the pair and triplet vectors will be modified. This advantage instead would not be obtained if only the single vectors of the level and/or their average were considered.

Note that the introduction of the synthesis vector adds new interrelationships in the propagation of correction gradients. In particular, correction gradients will be usable not only to modify aggregation functions related to base nodes, but also to modify synthesis functions related to synthesis nodes.

In addition, synthesis nodes may be targets of primary gradients, if they are used among the classification input data. They may then be targets of secondary gradients, when any base node of the next higher level becomes a source node for secondary gradients. Finally, when invested by correction gradients, the synthesis nodes may themselves be source nodes for secondary gradients directed to the synthesis input data, i.e., to all base vectors of the same level H^{t}ᵢ

Obviously a skilled person will be able to make numerous modifications equivalent to the above-mentioned variants, without departing from the scope of protection defined by the joined claims.

## Claims

1. Method of automatic processing of at least a portion (3) of a natural language text (1) by means of an artificial intelligence software, comprising:
- encoding a sequence of language units (4) of the text portion (3) in a respective sequence of original vectors (Ei) by means of a word embedding or character embedding algorithm,
- processing the sequence of original vectors (Eᵢ) by means of an encoding model with a graph neural network (2),
wherein the graph neural network (2) comprises a plurality of nodes, a respective vector being assigned to each node,
wherein said nodes are organised into a plurality of levels (t), with a first level (t=1), a last level (t=tₘₐₓ) and one or more intermediate levels between the first and last level,
wherein each level (t) comprises a sequence of base nodes, each base node being identified in its own sequence by a respective index (i),
wherein processing the sequence of original vectors (Ei) comprises:
- assigning the original vectors (Eᵢ) to corresponding base nodes of the first level of the graph neural network (2) (H¹ᵢ=Eᵢ),
- associating, to each base node of each predetermined level (t), higher than the first level (t>1), the base node having a predetermined index (i), a respective vector (H^{t-1}ᵢ) calculated with a respective trainable aggregation function,
wherein the aggregation function is configured to combine aggregation input data, which include at least basic input data (H^{t-1}ᵢ₋₁, H^{t-1}ᵢ, H^{t-1}ᵢ₊₁), given by vectors associated to base nodes of the level (t-1) immediately lower than the predetermined level (t), having indexes equal respectively to the predetermined index (i), to the predetermined index reduced by one (i-1), if higher than zero, and to the predetermined index increased by one (i+1), if not higher than the number (n) of base nodes present in each level (t),
- assigning, by means of a neural classifier, a linguistic annotation (5), of morphological, grammatical, logical and/or semantic type, to each linguistic unit (4) of the analysed text portion (3),
wherein the classifier algorithm is configured to calculate each linguistic annotation (4) by means of a respective classification function, configured to combine classification input data, given by a plurality of vectors assigned to a plurality of nodes of the graph neural network (2) of the encoding model,
**characterised in that,** while processing the sequence of original vectors (Ei) by means of the encoding model:
- at least one level (t) of the graph neural network (2), higher than the first level (t>1), is selected as the interconnection level, whose base nodes are indicated as interconnection nodes,
- for each predetermined interconnection node, the aggregation function is configured to use, as additional aggregation input data with respect to the basic input data (H^{t-1}ᵢ₋₁, H^{t-1}ᵢ, H^{t-1}ᵢ₊₁), also a spaced vector (H^{t-1}ᵢ₊ₖ), relative to a spaced node having a spaced index (i+k), that is spaced from the predetermined index (i) by a respective jump distance (k),
- wherein the jump distance (k) is calculated for each predetermined interconnection node by means of a machine learning mechanism, which for at least one of the interconnection nodes returns a jump distance (k) with a module greater than one (|k|>1).

2. Method, according to claim 1, wherein the interconnection level is the last level (tₘₐₓ) of the graph neural network (2).

3. Method according to claim 1 or 2, wherein the machine learning mechanism is a reinforcement learning mechanism, whereby calculating the jump distance (k) comprises:
- estimating an optimal jump distance by means of a trainable agent function,
- defining an exploitation probability and a complementary exploration probability,
wherein the jump distance (k) is selected equal to the optimal distance with a probability given by the exploitation probability, and the jump distance (k) is selected to be different from the optimal distance with a probability given by the exploration probability,
- modifying the agent function, based on comparing the verbal categories calculated by the classifier with corresponding verified reference categories.

4. Method according to any claim from 1 to 3, comprising:
- estimating an optimal jump distance by means of a trainable agent function, which uses as agent input data the same aggregation input data of the predetermined interconnection node, and in addition the vector (H¹ᵢ) associated with the base node of the first level (t=1), having the same index (i) of the predetermined interconnection node.

5. Method according to any claim from 1 to 4, wherein a common maximum distance is set for all interconnection nodes, and the jump distance (k) is selected by the machine learning mechanism with a module not exceeding the maximum distance.

6. Method according to any claim from 1 to 5, wherein:
- the aggregation function related to the predetermined interconnection node is configured to assign to the spaced vector (H^{t-1}ᵢ₊ₖ) a first weight (λ), and to calculate a second weight (1-λ) complementary to the first weight (λ),
- the second weight (1-λ) is assigned to a vector of the basic input data (H^{t-1}ᵢ₋₁, H^{t-1}ᵢ, H^{t-1}ᵢ₊₁), that is assigned to a node of the level (t-1) immediately lower than the predetermined level (t), having an index selected as follows:
- if the spaced index (i+k) is higher than the predetermined index (i), an index equal to the predetermined index increased by one (i+1) is selected, and
- if the spaced index (i+k) is lower than the predetermined index (i), an index equal to the predetermined index decreased by one (i-1) is selected.

7. Method according to any claim from 1 to 6, comprising:
- comparing the language annotations (5) calculated by the classifier with corresponding verified reference categories, and in case of differences, generating a plurality of correction gradients,
- using each correction gradient to modify the trainable aggregation function relative to a corresponding node of the graph neural network (2),
wherein primary correction gradients are generated for first nodes, given by nodes having assigned the vectors used as classification input data,
wherein secondary correction gradients are generated in cascade for second nodes starting from predetermined origin nodes, which in turn received primary or secondary correction gradients, the second nodes being given by nodes having assigned vectors used as aggregation input data for the respective origin nodes.

8. Method according to claim 7, comprising, in the cascade generation of secondary correction gradients, when a predetermined interconnection node becomes an origin node, because it received a primary or secondary correction gradient:
- generating secondary correction gradients, starting from the predetermined interconnection node, at least for second nodes having assigned vectors used as basic input data (H^{t-1}ᵢ₋₁, H^{t-1}ᵢ, H^{t-1}ᵢ₊₁) by the predetermined interconnection node, but not generating any secondary correction gradients, starting from the predetermined interconnection node, for the spaced node (H^{t-1}ᵢ₊ₖ).

9. Method according to any claim from 1 to 8, wherein:
- at least each level (t) of the graph neural network (2) lower than the last level (tₘₐₓ) comprises, in addition to the respective base node sequence, a respective synthesis node having assigned a synthesis vector (G^{t}),
- the method comprises calculating the synthesis vector (G^{t}) by means of a trainable synthesis function, which is configured to combine, as synthesis input data:
- the vectors assigned to all base nodes (H^{t}ᵢ) having the same level (t) of the synthesis node,
- and preferably also pair vectors, each given by the sum of a pair of vectors (H^{t}ᵢ, H^{t}i₊₁) assigned to base nodes having a pair of indexes (i, i+1) consecutive to each other, in the same level (t) of the synthesis node,
- and preferably also triplet vectors, each given by the sum of a triplet of vectors (H^{t}ᵢ, H^{t}ᵢ₊₁, H^{t}ᵢ₊₂), assigned to base nodes having a triplet of indexes (i, i+1, i+2) consecutive to each other, in the same level (t) of the synthesis node,
- wherein each aggregation function, for a respective base node with predetermined level (t) and predetermined index (i), is configured to combine, as aggregation input data, also the synthesis vector (G^{t-1}) assigned to the synthesis node of the level (t-1) immediately lower than the predetermined level (t), in addition to the basic input data (H^{t-1}ᵢ₋₁, H^{t-1}ᵢ, H^{t-1}ᵢ₊₁).

10. Method of automatic processing of a natural language text (1) by means of an artificial intelligence software, comprising:
- segmenting the text (1) into a sequence of text portions (3), including at least a first text portion and at least a second text portion immediately following the first one,
- sequentially processing each predetermined text portion (3), by repeating for each text portion (3) a partial processing, carried out each time by the method according to any of the claims 1 to 9, at least in its parts of encoding the sequence of linguistic units (4) into the sequence of original vectors (Eᵢ), and of processing the sequence of original vectors (Ei) by means of the graph neural network (2), while the part of assigning a linguistic annotation (5) to each linguistic unit (4) by means of the classifier algorithm is carried out indifferently either for each partial processing or at the end of the last partial processing,
- after the partial processing of the first text portion (3), selecting one or more memory nodes, selected among the nodes of the graph neural network (2) used for the partial processing of the first text portion, wherein at least one of the memory nodes belongs to a level (t) higher than the first one (t>1),
wherein the partial analysis of the second text portion comprises:
- dividing the base nodes of the first level of the graph neural network (2) into retrospection nodes and prosecution nodes,
- assigning to the retrospection nodes the vectors that, in the processing of the first text portion, were assigned to said selected memory nodes, and
- assigning to the prosecution nodes the original vectors (Eᵢ) obtained from the encoding of the sequence of verbal entities of the second text portion.

11. Computer-readable data carrier, having stored instructions for performing a method according to any of claims 1 to 10.
